(19) **Europäisches Patentamt**
**European Patent Office**
**Office européen des brevets**

(11) **EP 2 612 302 B1**

(12) # EUROPEAN PATENT SPECIFICATION

(45) Date of publication and mention
of the grant of the patent:
**19.08.2020 Bulletin 2020/34**

(51) Int Cl.:
**G06T 15/10** *(2011.01)* **G06T 17/05** *(2011.01)*

(21) Application number: **10849614.2**

(22) Date of filing: **02.09.2010**

(86) International application number:
**PCT/EP2010/005391**

(87) International publication number:
**WO 2012/028164 (08.03.2012 Gazette 2012/10)**

(54) **A COMBINED PROJECTION METHOD AND AN APPARATUS FOR IMPROVING ACCURACY OF MAP PROJECTIONS**

KOMBINIERTES PROJEKTIONSVERFAHREN UND VORRICHTUNG ZUR ERHÖHTEN GENAUIGKEIT VON KARTENPROJEKTIONEN

PROCÉDÉ DE PROJECTION COMBINÉE ET APPAREIL D'AMÉLIORATION DE LA PRÉCISION DE PROJECTIONS CARTOGRAPHIQUES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**10.07.2013 Bulletin 2013/28**

(73) Proprietor: **King Saud University**
**11421 Riyadh (SA)**

(72) Inventors:
• **BILANI, Hasan, M.**
**Riyadh 11421 (SA)**
• **AL-GARNI, Abdullah, M.**
**Riyadh 11421 (SA)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
**US-A1- 2002 126 129**

• **United Nations: "Handbook on geographic information systems and digital mapping", , 2000, XP002671080, ISBN: 9211614260 Retrieved from the Internet: URL:http://unstats.un.org/unsd/publication /SeriesF/SeriesF_79E.pdf [retrieved on 2012-03-07]**

• **David M. Goldberg, J. Richard Gott: "Large-Scale Distortions in Map Projections", , 2006, 2006, pages 1-33, XP002671081, Retrieved from the Internet: URL:cdsweb.cern.ch/record/980103/files/060 8501.pdf [retrieved on 2012-03-07]**

• **Timothy G. Feeman: "Portraits of the Earth - A Mathematician Looks at Maps", 2002, AMS - American Mathematical Society, USA ISBN: 0-8218-3255-7 vol. Vol.18, pages 1-85, * p.1-2, 11-13, 50-51, 62-63 ***

• **anonymus: "D I G I T A L A E R I A L S K E T C H M A P P I N G S Y S T E M", FHTET , 13 October 2008 (2008-10-13), Retrieved from the Internet: URL:http://web.archive.org/web/20080815000 000*/http://www.fs.fed.us/foresthealth/tec hnology/pdfs/FS_dasm.pdf [retrieved on 2014-03-20]**

• **Greg Sterling: "Google Earth Updates For PC 8: Mobile,Adds Great iPad Version", searchengineland , 15 June 2010 (2010-06-15), Retrieved from the Internet: URL:https://searchengineland.com/google-ea rth-updates-fhttps://searchengineland.com/ google-earth-updates-for-pc-mobile-adds-gr eat-ipad-version-44404or-pc-mobile-adds-gr eat-ipad-version-44404 [retrieved on 2019-11-04]**

• **lucasfinley: "Google Earth App Review for iPad", , 18 June 2010 (2010-06-18), pages 1-6, XP054979873, Retrieved from the Internet: URL:https://www.youtube.com/watch?v=n91jje 0BJz8 [retrieved on 2019-11-01]**

EP 2 612 302 B1

**(Cont. next page)**

• Derek F Reilly ET AL: "Map Morphing: Making Sense of Incongruent Maps", Proceedings of Graphics Interface, 1 January 2004 (2004-01-01), pages 231-238, XP055271047, Retrieved from the Internet: URL:http://citeseerx.ist.psu.edu/viewdoc/download?doi=10.1.1.90.132&rep=rep1&type=pdf [retrieved on 2016-05-09]

## Description

The present invention refers to a map projection method combining first intermediate data obtained by a first projection method for projecting surface data and second intermediate data obtained by a second projection method for projecting surface data to generate a projected map. The present invention further refers to an apparatus for map projections and to a geographic system comprising said apparatus.

## Background of the invention

Map projections are essential tools for generating maps for civil engineering, urban planning and various navigational tasks for technical applications. Errors and distortions in these maps greatly influence the resulting quality and accuracy of the performed task. For example, in civil engineering projects, like the construction of roads or tunnels, in which long distances of hundreds of meters have to be bridged at an accuracy in the range of centimetres, the errors induced by distorted maps may lead to significant follow-up costs.

In general, map projections allow to represent the surface of a three dimensional object, like a sphere or an ellipsoid, on a plain. Basically any mathematical function that transforms coordinates from the curved surface to the plain is regarded as a projection. Since each map projection of a curved surface causes certain distortions, map projections have been classified in terms of metrics or properties that are preserved well and/or impose distortions in the projected map, for example, size of the projected area, distortion of shape, accuracy of directions, and preservation of bearing, distance or scale. Typically, map projections preserve one or more of these properties though not all of them simultaneously. Among these criteria the preservation of local angles and accuracy of the projected area are important projection properties in the application areas of civil engineering and urban planning. Map projections, that preserve angles locally are also called conformal.

Among other projection techniques, conical projections and UTM projections are commonly used to represent the surface of the earth. The former is based on the principle that a cone is superimposed over the ellipsoid representing the earth and the surface is thereafter projected on the cone. The final planar map is generated by unfolding the cone. The UTM projection is based on a sub-division of the surface of the earth into sixty zones, each covering six degrees of longitude. For each zone a map is generated using the transverse Mercator projection, which maps the surface of the earth on a cylinder, which is thereafter unfolded to form a plain.

Apart from the already mentioned errors inherent to each projection technique, conventional maps are error-prone when they are used at their boundaries or even outside of their projection scopes. However, since most areas considered in civil engineering and urban planning are usually not located in the centre of a projection and may even span more than one projection zone, the projection parameters of one central zone typically have to be used also at the boundaries and even for generating maps for the adjacent zones, which therefore leads to the abovementioned errors and distortions. Moreover, these errors and distortions accumulate over the borders of zones and greatly degrade the quality of the results of the particular planning tasks. Similarly, for most applications focused on large areas the use of a conformal conical projection does not fulfil the required accuracy requirements.

Since traditional projection techniques require the application of methods that induce high distortions and result in poor accuracy, for example of larger areas, maps produced today using UTM projections and conical projections do not achieve a precision and reliability required in civil engineering and urban planning tasks.

US 2002/0126129 A1 discloses a sampling-efficient mapping of images and presents mapping techniques borrowed from cartography, leading to improved sampling efficiency of mapping textures onto any three-dimensional surfaces. Furthermore, a combination of stereographic maps at poles with a Mercator projection at the equator is described in order to generate a conformal polar-capped map.

The "Handbook on geographic information systems and digital mapping", http://unstats.un.org/unsd/publication/SeriesF/SeriesF_79E.pdf, and the article by David M. Goldberg and J. Richard Gott: "Large-Scale Distortions in Map Projections", 2006, refer to projection techniques. In Timothy G. Feeman: "Portraits of the Earth - A Mathematician Looks at Maps", 2002, AMS - American Mathematical Society, USA vol. 18, pages 1-85, mathematical fundaments of map generation techniques are discussed.

The FHTET publication on "Digital Aearial Sketchmapping Systems", 2008, published on http://www.fs.fed.us/foresthealth/technology/pdfs/FS_dasm.pdf, refers to geo-location of features on the ground as observed from aerial platforms.

Greg Sterling: "Google Earth Updates For PC 8: Mobile, Adds Great iPad Version", 2010, discloses an adaptation of the Google Earth geographic information system for iOS with native iPad support. A corresponding video is provided at "Google Earth App Review for iPad", 2010 at https://www.youtube.com/watch?v=n91jjeOBJz8.

Derek F Reiliy et al.: "Map Morphing: Making Sense of Incongruent Maps", Proceedings of Graphics Interface, 2004, pages 231-238, refers to an interactive visualization technique that provides a user-controlled, animated translation between maps.

Therefore, it is an object of the present invention to overcome these disadvantages and to provide a method for improving accuracy of map projections, in particular to minimize distortions related to angular and areal metrics. It is also an object of the present invention to provide reliable projection techniques that allow for generation of maps with an improved accuracy for regions located at map boundaries and for large areas.

**Summary of the invention**

The invention is defined by the geographic information system according to the independent claim. Preferred embodiments are defined in the dependent claims.

A map projection method according to a preferred embodiment of the present invention comprises the steps of projecting surface data using a first projection method, thereby generating first intermediate data, projecting the surface data using a second projection method, thereby generating second intermediate data, and combining the first and second intermediate data to generate a projected map. Thus, the surface data to be projected are independently subjected to a first projection method and a second projection method leading to two independent intermediate data sets, which in combination form the desired projected map.

The surface data are related to locations on a surface, which is to be represented on the projected map. Each location of the surface is defined by a set of coordinates related to a one-, two-, three- or multi-dimensional coordinate system, such as a Cartesian coordinate system, polar coordinate system, cylindrical or spherical coordinate system, preferably a geographic coordinate system. Preferably, for a spherical object a position is given by its longitude $\lambda$ and latitude $\varphi$. The surface data may include a set of data elements related to spatiotemporal characteristics of the surface, such as systematic, regional, descriptive and analytical data for each location or area of the surface, for example geographic information comprising statistical data of features and population, surface structure, vegetation, economy, heat, pressure, rainfall, and others. Furthermore, the surface data may be represented as a digital data set of data elements or may comprise analogue values.

The first and the second intermediate data are directly related to the surface data and preferably comprise a set of data elements related to the data elements of the surface data. Similarly, the data elements of the first and the second intermediated data projected using the first projection method and the second projection method, respectively, are related to a location on a projection object, for example a plain, defined by the respective projection method. Each location on the respective projection object can be defined by a set of coordinates related to a one-, two-, three- or multi-dimensional coordinate system, such as a Cartesian coordinate system, polar coordinate system, cylindrical or spherical coordinate system. For example, a location on a plain is defined as two values $(x, y)$ defining its position in relation to an origin.

According to the inventive method, the first and second projection methods use the location specified by each data element of the surface data to compute the location of a corresponding data element of the first intermediate data and the second intermediate data, respectively. Thus, each data element of the surface data is processed into two independent, yet related data elements of the first and second intermediate data. Also, the first and second projection methods may take into account the spatiotemporal characteristics represented by each data element.

In the final processing step of the inventive method, the corresponding data elements of the first and second intermediate data are combined to generate a projected map. Preferably, the projected map is represented by a set of data elements each related to a position $(x, y)$ on a plain. The combining step is not restricted to a particular function or transformation. The combining may further comprise a spatiotemporal post-processing of the resulting data elements, such as smoothing, averaging, classification, thresholding, interpolation and other methods. For example two distinct source data elements of the surface data may result in two target data elements referring to two proximate locations or even the same location on the projected map. During post-processing both target data elements may be used to generate one single data element of the projected map combining or averaging the spatiotemporal characteristics of the two source data elements of the surface data.

The projecting steps can be performed sequentially or in parallel on one or more computing resources. Preferably, each projecting step is preformed on a dedicated computing resource, such as a processor, core, or hardware logic.

The inventive map projection method greatly improves the accuracy of the projected map by reducing distortions and enhancing the quality of the project map. It is also a flexible approach, which enables a selection of appropriate projection methods for particular regions of the earth and allows for adjustment of factors influencing the combination of the intermediate data sets.

According to a preferred embodiment of the present invention the method further comprises the step of deriving the surface data from an ellipsoid. The surface data is derived from the ellipsoid by analyzing the surface of said ellipsoid and constructing a set of data elements for each location on the ellipsoid.

In another embodiment of the present invention said deriving the surface data comprises transforming the ellipsoid into an oblique spherical representation. Preferably, the ellipsoid surface data is transformed into a normal spherical representation and subsequently, the normal spherical representation is transformed into an oblique spherical representation. Preferably, each position on the surface of the ellipsoid is defined in terms of longitude $\lambda$ and latitude $\varphi$, which are transformed into auxiliary coordinates ($\lambda'$,$\varphi'$), used to generate the oblique spherical representation defined by oblique spherical coordinates ($\xi,\eta$) with respect to an oblique pole on a sphere that may vary from the poles characterizing the ellipsoid.

In a preferred embodiment said transforming the ellipsoid into an oblique spherical representation comprises selecting reference points on the ellipsoid, calculating an oblique pole using said reference points, calculating oblique spherical coordinates for each data element on the ellipsoid and using the oblique pole and the oblique spherical coordinates to derive the surface data. Preferably, each location ($\lambda,\varphi$) on the ellipsoid is transformed by first computing the auxiliary coordinates ($\lambda'$,$\varphi'$) for the normal spherical representation, wherein $\lambda' = \lambda$ and $\varphi'$ is derived as

$$\tan(45° + \frac{\varphi'}{2}) = \frac{\tan(45° + \frac{\varphi}{2})}{\tan^e(45° + \frac{\psi}{2})}$$

with $\sin(\psi) = e\sin(\varphi)$.

The auxiliary coordinates ($\lambda'$,$\varphi'$) are thereafter transformed to the oblique spherical coordinates ($\xi,\eta$), such that

$$\sin\xi = \sin\varphi'\sin\varphi'_Q + \cos\varphi'\cos\varphi'_Q\cos(\lambda'_Q - \lambda'),$$

and

$$\tan\eta = \frac{\cos\varphi'\sin(\lambda' - \lambda'_Q)}{\sin\varphi'\cos\varphi'_Q + \cos\varphi'\sin\varphi'_Q\cos(\lambda' - \lambda'_Q)},$$

wherein $(\lambda'_Q,\varphi'_Q)$ is the oblique pole of the oblique spherical representation. The oblique pole can be calculated based on the selected reference points.

According to another preferred embodiment of the present invention said choosing reference points comprises choosing at least four reference points. Preferably, a first reference point is chosen in the centre of a region and at least three reference points are chosen at the periphery of the region, preferably, as farthest on the border as possible. Preferably, each reference point $p_i$ is defined by its coordinates ($\lambda_i,\varphi_i$). The oblique pole may be derived by selecting three reference points, comprising a central point $p_0$ and two additional points $p_1$ and $p_2$, and transforming their coordinates to respective auxiliary coordinates $(\lambda'_i,\varphi'_i)$. For example, for a conical projection method the oblique pole $(\lambda'_Q,\varphi'_Q)$ is preferably computed as

$$\tan\lambda'_Q = \frac{\cos\varphi'_1\cos\lambda'_1(1-f) + f\cos\varphi'_O\cos\lambda'_O - \cos\varphi'_2\cos\lambda'_2}{\cos\varphi'_1\sin\lambda'_1(f-1) - f\cos\varphi'_O\sin\lambda'_O + \cos\varphi'_2\sin\lambda'_2},$$

and

$$\tan\varphi'_Q = \frac{\cos\varphi'_1\cos(\lambda'_Q - \lambda'_1) - \cos\varphi'_2\cos(\lambda'_Q - \lambda'_2)}{\sin\varphi'_2 - \sin\varphi'_1}$$

with

$$f = \frac{\sin\varphi'_1 - \sin\varphi'_2}{\sin\varphi'_1 - \sin\varphi'_O}.$$

Similarly, for cylindrical projection methods the oblique pole $(\lambda'_Q, \varphi'_Q)$ is preferably derived as

$$\tan \lambda'_Q = \frac{\cos \lambda'_O \tan \varphi'_1 - \cos \lambda'_1 \tan \varphi'_O}{\sin \lambda'_1 \tan \varphi'_O - \sin \lambda'_O \tan \varphi'_1},$$

and

$$\tan \varphi'_Q = -c \tan \varphi'_O \cos(\lambda'_Q - \lambda'_O).$$

According to yet another embodiment of the present invention said deriving the surface data comprises sampling a map representing the surface of said ellipsoid. Preferably, the map itself is a UTM projected map, however, any other projection of a surface can be used to generate the map. The map may be an analogous map, such as a printed map, or a digital map comprising surface data. The invention does not rely on a particular map type or content. For example the map can be coded according to a colour pattern and may comprise spatial data related to individual locations on the map. During said processing the continuous data of the map is subdivided according to a two-dimensional rectangular pattern or grid and for each grid element a sample of the map is taken. The samples may correspond to colour values representing geographic information. Preferably, the sampling is done at a resolution which is capable of sufficiently representing the relevant data on the map. For example, the map may be a standard map of a country of the earth depicting each province in a different colour and comprising data related to roads as lines and data related to cities showing their expansion in a particular colour. The sampling may be preferably done at an accuracy of at least 150 dots per inch (dpi) for a map of a size of 10 x 10 cm$^2$, and preferably at an accuracy of 200 to 2400 dpi. Each sample may be classified according to its colour and position to represent the data of the map, such as a political region, roads or cities. Moreover, adjoined samples defining an area belonging to the same class can be analyzed and used to define an additional data element representing said area. The final location of such additional data elements can be defined as a midpoint of the area, such a the centre of a political region or a city. Roads may be represented by a plurality of additional data elements representing start and end points as well as connecting points defining straight segments of the roads.

In a preferred embodiment of the present invention the ellipsoid comprises geographic data representing a surface of the earth. Preferably, a portion of the ellipsoid comprises data for a continent or large geopolitical regions, like the Arabic peninsula, Europe or Northern America. The portion may also represent a particular country, like the Kingdom of Saudi Arabia, European countries, or the United States of America.

In a particular preferred embodiment of the present invention a portion of the ellipsoid represents one or more UTM zones, preferably four UTM zones wherein said portion is used to derive the surface data. Even though the invention is not limited by a particular UTM zone or latitude band, the UTM zones are preferably selected from a group consisting of UTM zones 36 to 39 preferably comprising latitude bands Q to S for the Kingdom of Saudi Arabia, UTM zones 29 to 37 preferably comprising latitude bands S to W for Europe, UTM zones 28 to 39 preferably comprising latitude bands H to S for Africa, UTM zones 10 to 20 preferably comprising latitude bands Q to U for Northern America, UTM zones 15 to 25 preferably comprising latitude bands E to Q for Southern America, UTM zones 49 to 56 preferably comprising latitude bands G to L for Australia, UTM zones 43 to 52 preferably comprising latitude bands Q to U for East Asia, and UTM zones 34 to 02 preferably comprising latitude bands S to X for the Russian Federation.

In yet another preferred embodiment of the present invention a portion of the ellipsoid represents a surface of the earth in the range of 10° to 40° N latitude and 20° to 60° E longitude, preferably 15° to 35° N latitude and 25° to 60° E longitude, wherein said portion is used to derive the surface data.

According to a particularly preferred embodiment of the present invention the first projection method is one of an oblique Lambert projection and an oblique Mercator projection, and the second projection method is an oblique stereographic projection. Preferably, the oblique Lambert projection transforms a data element represented as oblique spherical coordinates $(\xi, \eta)$ into a data element of the first intermediate data with coordinates $(x_L, y_L)$ on a plain with a scale $m_L$, such that

$$x_L = c \tan \xi_O e^{-\sin \xi_O (D - D_O)} \sin\{(\eta - \eta_O) \sin \xi_O\},$$

$$y_L = c \tan \xi_O [1 - e^{-\sin \xi_O (D - D_O)} \cos\{(\eta - \eta_O) \sin \xi_O\}],$$

and

$$m_L = \frac{\cos\xi_O \, e^{-\sin\xi_O(D-D_O)}}{\cos\xi} \, ,$$

wherein $D = \ln\tan(\frac{\pi}{4} + \frac{\xi}{2})$ and $D_O = \ln\tan(\frac{\pi}{4} + \frac{\xi_O}{2})$.

Likewise, an oblique Mercator projection transforms a data element of the surface data into a data element of the first intermediate data. Given the representation of a data element in oblique spherical coordinates $(\xi, \eta)$, the oblique Mercator projections delivers the location of the resulting data element as coordinates $(x_M, y_M)$ on a plain with a scale $m_M$ according to the following equations:

$$x_M = (\eta - \eta_O),$$

$$y_M = \ln\tan(45° + \frac{\xi}{2}),$$

and

$$m_M = \frac{1}{\cos\varphi}.$$

The oblique stereographic projection, which is preferably used as the second projection method, transforms the location of each data element into coordinates $(x_S, y_S)$ on a plain with scale $m_S$, such that

$$x_S = 2\frac{\cos\xi\sin(\eta - \eta_O)}{1 + \sin\xi\sin\xi_O + \cos\xi\cos\xi_O\cos(\eta - \eta_O)} \, ,$$

$$y_S = 2\frac{\sin\xi\cos\xi_O - \cos\xi\sin\xi_O\cos(\eta - \eta_O)}{1 + \sin\xi\sin\xi_O + \cos\xi\cos\xi_O\cos(\eta - \eta_O)} \, ,$$

and

$$m_S = \frac{2}{1 + \sin\xi\sin\xi_O + \cos\xi\cos\xi_O\cos(\eta - \eta_O)} \, .$$

In another embodiment of the present invention said combining the first and second intermediate data comprises selecting a weighting factor and applying the weighting factor to a weighted sum of the first and second intermediate data. The weighting factor $k$ is preferably selected in the range of 0.1 to 0.9, preferably in the range of 0.2 to 0.5, and most preferably $k = 0.35$. The selection of $k$ may be a result of an error analysis based on projections of a plurality of reference points $p_i$. The weighting factor $k$ is applied to a weighted sum of a data element of the first intermediate data given as $(x_1, y_1)$ and a data element of the second intermediate data given as $(x_2, y_2)$, which results in a location $(x, y)$ and scale $m$ of a data element on the projected map, such that

$$x = R \cdot (k \cdot x_1 + (1 - k) \cdot x_2),$$

and

$$y = R \cdot (k \cdot y_1 + (1-k) \cdot y_2),$$

wherein $(x_1, y_1)$ is preferably one of $(x_L, y_L)$ and $(x_M, y_M)$, and $(x_2, y_2) = (x_S, y_S)$. $R$ denotes the radius of the sphere of the spherical representation, which is given as:

$$R = \frac{N \cdot \cos \varphi_k}{\cos \varphi'_k},$$

wherein $\varphi_k$ is the standard parallel passing through the centre point $p_0$ and $\varphi'_k$ the projection of the standard parallel on the sphere in the spherical representation. For each combination of data elements the weighted scale $m$ is computed as $m^2 = k^2 m_L^2 + (1-k)^2 m_S^2 + \frac{2k(1-k)}{\cos^2 \xi}(\frac{\partial x_1}{\partial \eta}\frac{\partial x_2}{\partial \eta} + \frac{\partial y_1}{\partial \eta}\frac{\partial y_2}{\partial \eta})$ in case of using the oblique Lambert projection, and $m^2 = k^2 m_M^2 + (1-k) \cdot m_S^2\left\{1 + \frac{k\cos(\eta - \eta_O)}{\cos \xi}\right\}$ in case of using the oblique Mercator projection.

According to a particularly preferred embodiment, the inventive method further comprises displaying the projected map. The coordinates $(x, y)$ and the scale $m$ of each data element are used to generate a graphical representation. Also, a spatiotemporal post-processing, similar to the processing techniques used during the combining step, could be used, such as smoothing, averaging, classification, thresholding, interpolation and other methods, if two distinct projected data elements refer to two proximate locations (for example within a neighbourhood of a pre-defined size) or even to the same location on the projected map. These data elements may be processed to form one single graphical representation. Also, post-processing techniques, such as averaging and interpolation, could be applied, to quickly compute graphical representations for missing values in-between of the projected data elements. All graphical representations may thereafter be displayed on a digital screen or could be printed on a carrier, such as paper, plastic or other synthetic material, to display the projected map.

An apparatus for map projections according to the present invention comprises storage means for storing surface data, and one or more processing units connected to the storage means for projecting the surface data using a first projection method to generate first intermediate data, for projecting the surface data using a second projection method to generate second intermediate data, and for combining the first and second intermediate data to generate a projected map. The storage means may comprise one or more volatile or non-volatile storage units. One or more processing units may be directly connected to the storage means or may communicate with the storage means via a bus. The one or more processing units may comprise one or more processors and/or one or more cores and/or may be represented by one or more virtual machines running on one or more physical processing units.

In a particularly preferred embodiment the one or more processing units are further configured to derive the surface data from an ellipsoid.
According to another embodiment of the present invention the one or more processing units are configured to derive the surface data by transforming the ellipsoid into an oblique spherical representation.

In another preferred embodiment, the inventive apparatus further comprises input means for selecting reference points on the ellipsoid, wherein the one or more processing units are configured to transform the ellipsoid by calculating an oblique pole using said reference points, calculating oblique spherical coordinates for each data element on the ellipsoid and using the oblique pole and the oblique spherical coordinates to derive the surface data. The input means may comprise any direct or indirect input devices, such as a keyboard, mouse, joystick, devices based on accelerometers and other sensors, or any other pointing device.

In yet another embodiment of the present invention the storage means further stores a map representing the surface of said ellipsoid and the one of more processing units are further configured to derive the surface data by sampling the map. Preferably, the map stored in said storage means is a digital representation of the surface. Preferably, the one or more processing units are also configured to drive a scanning device that samples a printed map and delivers the digital representation, such as a digital image of the printed map, wherein the digital image preferably comprises picture elements (pixels) arranged in a rectangular, equally spaced grid or pattern.

According to another embodiment of the invention the ellipsoid comprises geographic data representing a surface of the earth.

In another particularly preferred embodiment of the present invention the first projection method is one of an oblique Lambert projection and an oblique Mercator projection, and the second projection method is an oblique stereographic projection.

Furthermore, according to a preferred embodiment of the present invention the one or more processing units are configured to combine the first and second intermediate data by selecting a weighting factor and applying said weighting factor to a weighted sum of the first and second intermediate data.

According to the claimed invention the apparatus further comprises display means for displaying the projected map. The display means may comprise any output means or an interface providing digital or analogue data signals for displaying the projected map. The output means preferably comprise an electronic visual display, such as liquid crystal displays (LCD), plasma display panels and light-emitting diode (LED) displays, or any flexible or rollable display device.

Also, according to a preferred embodiment of the present invention the input means and the display means are integrated to form a touchscreen. The touchscreen may be operated directly with a finger or hand, or indirectly by using a stylus or a light pen, or the like. Preferably, the touchscreen is used for selection of the reference points on a displayed surface of the ellipsoid or a map and for selection of an appropriate weighting factor according to visual feedback denoting the current distortion of the projected map.

Furthermore, a geographic information system according to the present invention comprises the inventive apparatus.

## Detailed description of the invention

Further details and characteristics of the invention are described below in an exemplifying example of the invention in conjunction with the drawings in which:

Figure 1    shows a schematic illustration of the earth depicting lines of longitude;
Figure 2    outlines a division of the earth into 60 UTM zones;
Figure 3    shows a schematic view of the central meridian of zone 36;
Figure 4    is a map of the Arabic Peninsula with selected reference points;
Figure 5    illustrates the selection of reference points;
Figure 6    illustrates a spherical representation used to calculate oblique spherical coordinates in a geometrical diagram;
Figure 7    is a graph showing the dependency of weighting factor $k$ and scale $m$; and
Figure 8    is a bar chart showing the accuracy of maps generated according to the present invention in comparison with state of the art approaches.

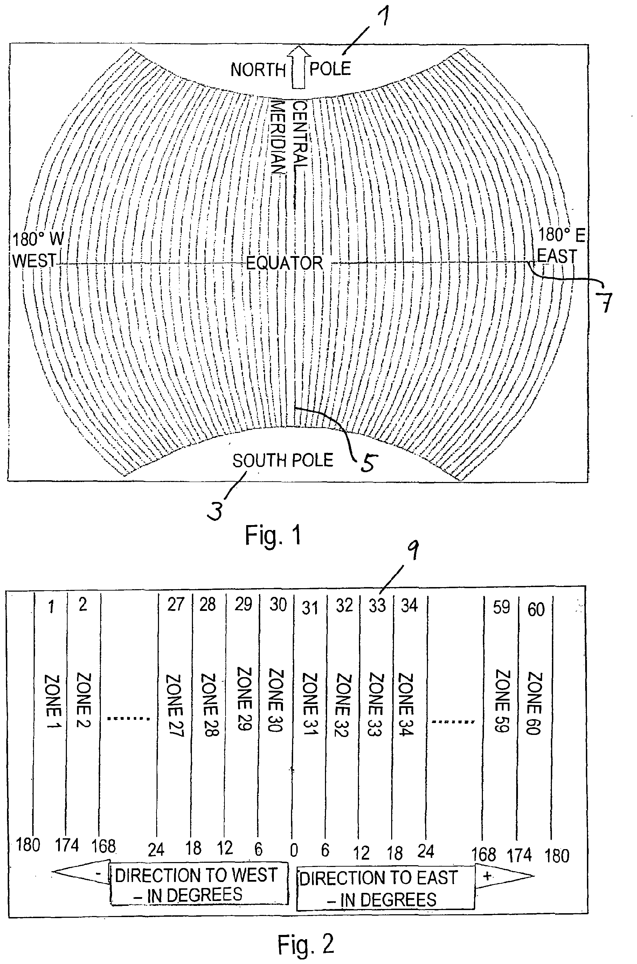

Figure 1 shows a schematic view of the earth showing lines of longitude or meridians that are abstract equidistant arcs on the surface of the earth running from the north pole 1 to the south pole 3. The lines of longitude range from 180° west (W) to 180° east (E). The line of longitude 5 denoted with 0° is called central meridian or prime meridian. The position of a location on the surface of the earth is given by the line of longitude running through it. Furthermore, the position of said location on the line of longitude is given by the latitude. Circles of latitude or parallels are arranged perpendicular to the lines of longitude ranging from 90° south (S) to 90° north (N) with a central circle of latitude called the equator 7. Therefore, as well known in the art, each point on the surface of the earth can be conveniently located by its longitude $\lambda$ and latitude $\varphi$.

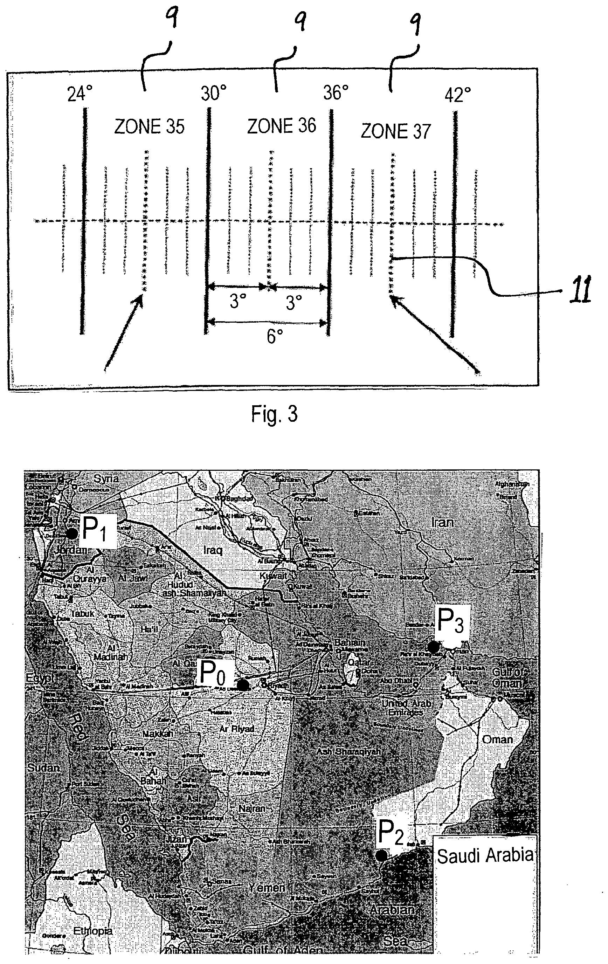

Figures 2 and 3 show a commonly used subdivision of the earth into 60 zones, each zone 9 spanning over 6° of longitude and having a central meridian 11 in its centre. Such zones 9 are conveniently used in the universal transverse Mercator (UTM) coordinate system as a grid for specifying locations on the surface of the earth. According to the UTM system maps are projected in each zone 9 following a specifically configured transverse Mercator projection. In addition, each UTM zone 9 may be subdivided into 20 latitude bands each spanning 8° of latitude, wherein each latitude band is denoted by a letter of the Latin alphabet, leaving out letters I and O, starting from the south pole 3 to the north pole 1. As a result of the artificial definition of the zones 9 and bands most regions of the earth, like the Arabic peninsula, Europe or Northern America, or even large countries, like the Kingdom of Saudi Arabia, may span over multiple zones 9. For example, the Kingdom of Saudi Arabia is mapped on four zones 9 of the UTM system, in particular zones 36, 37, 38, and 39. Obviously, since each zone 9 has its own mapping parameters for the UTM projection, the maps displaying large countries spanning over multiple zones 9 reveal distortions and irregularities on the boundaries of adjoined zones 9. Also, the common approach using parameters for a projection of a zone 9 also beyond the covered 6° of longitude leads to undesirable distortions and errors at the periphery of the resulting projected map.

Figure 4 shows a map of the Arabic Peninsula and the Kingdom of Saudi Arabia being generated using a Lambert projection. This map shows a region that extends beyond a single UTM zone. Figure 4 also shows the selection of a central point $p_0$ which serves as the centre of the projected map. Further reference points $p_1$, $p_2$, and $p_3$ are selected for calculation of an oblique pole $(\lambda'_Q, \varphi'_Q)$ and for calculation of distortions in order to determine a suitable weighting factor *k*.

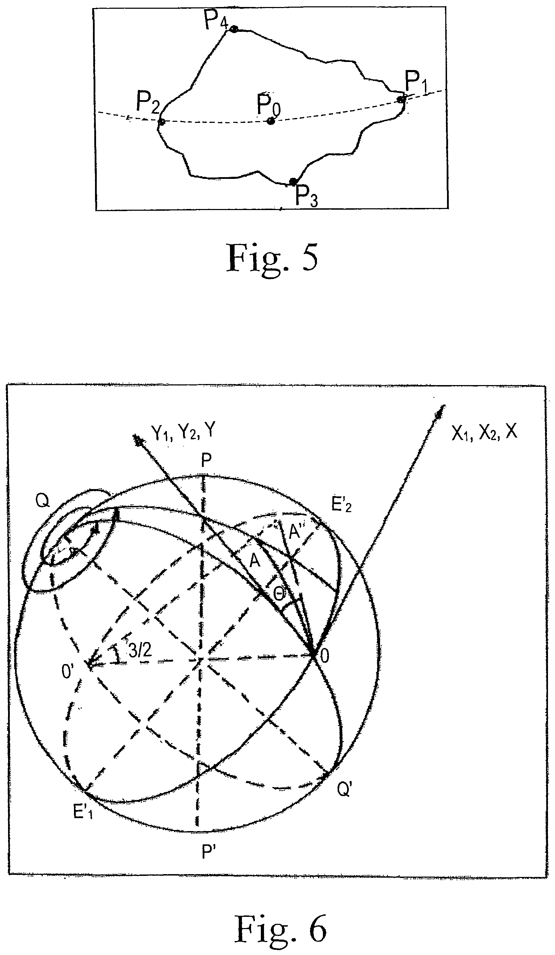

Figure 5 shows another selection of reference points comprising one central point $p_0$ and four additional reference points $p_1$, $p_2$, $p_3$, and $p_4$, wherein the central point $p_0$ is preferably selected at the centre of an area, e.g. a geographic area, which is in Figure 5 circumscribed by a continuous line, and the other four reference points $p_1$, ..., $p_4$ are preferably selected equally distributed at the farthest distances from the centre on the area boundary, i.e., on the continuous line. In the preferred embodiment of Figure 5, three reference points $p_0$, $p_1$, and $p_2$ are used to calculate the oblique pole $Q$ and are preferably distributed over the elongated area, indicated as a dashed line. Since in Figure 5 an oblique Lambert projection is used as the map projection, three reference points $p_0$, $p_1$, and $p_2$ are used to determine the coordinates of the oblique pole $Q$ and furthermore are used to determine the distortions in the area. Given the fact, that distortions are proportional to the distance from the centre of the projection and given the fact that one of the remaining reference points $p_3$ and $p_4$ is farther from the centre than the other remaining reference point, the distortion is preferably tested at the farthest remaining reference point and the other remaining reference point is ignored. Thus, reference point $p_4$ could be used to test the distortion and reference point $p_3$ could be ignored, since $p_4$ is farther away from the centre than $p_3$. Therefore, in a preferred embodiment, four reference points $p_0$, $p_1$, $p_2$, and $p_4$ are used to calculate the oblique pole $Q$ and the distortions in order to determine a suitable weighting factor *k*.

Figure 6 shows a geometric representation of a sphere with two poles *P, P'*, the central point $p_0$, oblique poles *Q, Q'*, as well as a plain spanned by two axes *x* and *y* used for the projection by the first projection method, the second projection method and the final combination that generates the resulting projected map.

The projected map can be generated by first selecting a plurality of reference points on an input map, for example the reference points $p_0$, $p_1$, $p_2$, and $p_3$ of Figure 4 or the reference points $p_0$, $p_1$, $p_2$, $p_3$, and $p_4$ of Figure 5. Each reference point $p_i$ can be represented by two coordinates specifying the longitude $\lambda$ and latitude $\varphi$, thus $p_i = (\lambda_i, \varphi_i)$. These coordinates may be transformed into auxiliary coordinates $(\lambda_i', \varphi_i')$ that are subsequently used for calculation of the oblique pole $Q = (\lambda_Q', \varphi_Q')$.

The calculation of the oblique pole Q is to a certain extent determined by the projection method used during further processing. In particular, at least two types can be identified: projections based on a cone, used for example in the oblique Lambert projection, and projections based on a cylinder, as used for example in the oblique Mercator projection. If a projection technique based on a cone is to be used, for example as a first projection method, the oblique pole $Q = (\lambda_Q', \varphi_Q')$ is given as

$$\tan \lambda_Q' = \frac{\cos \varphi_1' \cos \lambda_1' (1 - f) + f \cos \varphi_O' \cos \lambda_O' - \cos \varphi_2' \cos \lambda_2'}{\cos \varphi_1' \sin \lambda_1' (f - 1) - f \cos \varphi_O' \sin \lambda_O' + \cos \varphi_2' \sin \lambda_2'},$$

and

$$\tan \varphi_Q' = \frac{\cos \varphi_1' \cos(\lambda_Q' - \lambda_1') - \cos \varphi_2' \cos(\lambda_Q' - \lambda_2')}{\sin \varphi_2' - \sin \varphi_1'}$$

with

$$f = \frac{\sin \varphi_1' - \sin \varphi_2'}{\sin \varphi_1' - \sin \varphi_O'}.$$

For a projection technique based on a cylinder the oblique pole can be computed, such that

$$\tan \lambda_Q' = \frac{\cos \lambda_O' \tan \varphi_1' - \cos \lambda_1' \tan \varphi_O'}{\sin \lambda_1' \tan \varphi_O' - \sin \lambda_O' \tan \varphi_1'}$$

$$\tan \varphi_Q' = -c \tan \varphi_O' \cos(\lambda_Q' - \lambda_O').$$

After calculation of the oblique pole, the oblique spherical coordinates $(\xi, \eta)$ can be calculated for each position on the input map. The data represented in spherical coordinates $(\xi, \eta)$ may be used as the input of two independent projections, either following a first projection method, preferably an oblique Lambert projection or an oblique Mercator projection, most preferably an oblique Lambert projection, or following a second projection method, which is preferably an oblique stereographic projection. The two independent projections result in two intermediate data sets, comprising data elements represented as coordinates $(x_1, y_1)$ with a scale $m_1$ and $(x_2, y_2)$ with a scale $m_2$, respectively, for each location on the input map.

Thus, for a combination of the oblique Lambert projection with an oblique stereographic projection the projected coordinates $(x, y)$ with a scale $m$ are combined, such that

$$x = R\Big(kc \tan\xi_O e^{-\sin\xi_O(D-D_O)} \sin\{(\eta-\eta_O)\sin\xi_O\} + 2(1-k)\frac{\cos\xi\cos(\eta-\eta_O)}{1+\sin\xi\sin\xi_O+\cos\xi\cos\xi_O\cos(\eta-\eta_O)}\Big),$$

$$y = R\Big(kc \tan\xi_O \Big[1-e^{-\sin\xi_O(D-D_O)} \cos\{(\eta-\eta_O)\sin\xi_O\}\Big] + 2(1-k)\frac{\sin\xi\cos\xi_O-\cos\xi\sin\xi_O\cos(\eta-\eta_O)}{1+\sin\xi\sin\xi_O+\cos\xi\cos\xi_O\cos(\eta-\eta_O)}\Big),$$

and

$$m^2 = \Big(\frac{k^2}{\cos^2\xi}\cos^2\xi_O e^{-2\sin\xi_O(D-D_O)} + \frac{4(1-k)^2}{[1+\sin\xi\sin\xi_O+\cos\xi\cos\xi_O\cos(\eta-\eta_O)]^2} + \frac{2k(1-k)}{\cos^2\xi}(C_1C_2+C_3C_4)\Big)$$

with

$$C_1 = \frac{\partial x_1}{\partial \eta} = \cos\xi_O e^{-\sin\xi_O(D-D_O)} \cos\{(\eta-\eta_O)\sin\xi_O\},$$

$$C_1 = \frac{\partial x_1}{\partial \eta} = \cos\xi_O e^{-\sin\xi_O(D-D_O)} \cos\{(\eta-\eta_O)\sin\xi_O\},$$

$$C_3 = \frac{\partial y_1}{\partial \eta} = \cos\xi_O e^{-\sin\xi_O(D-D_O)} \sin\{(\eta-\eta_O)\sin\xi_O\},$$

and

$$C_4 = \frac{\partial y_2}{\partial \eta} = 2 \frac{\cos\xi \sin(\eta - \eta_O)\{\sin\xi + \sin\xi_O\}}{[1 + \sin\xi \sin\xi_O + \cos\xi \cos\xi_O \cos(\eta - \eta_O)]^2},$$

wherein $k$ is a weighting factor, $D = \ln\tan(\frac{\pi}{4} + \frac{\xi}{2})$, $D_O = \ln\tan(\frac{\pi}{4} + \frac{\xi_O}{2})$, and $R$ denotes the radius of the sphere of the spherical representation.

Due to the fact, that for an oblique Mercator projection the spherical coordinate $\xi_0$ of the centre point $p_0$ equals to 0, the computation of the projected coordinates $(x, y)$ with scale $m$ can be simplified for a combination of the oblique Mercator projection with an oblique stereographic projection to:

$$x = R\left\{k(\eta - \eta_O) + 2(1-k)\frac{\cos\xi \sin(\eta - \eta_O)}{1 + \cos\xi \cos(\eta - \eta_O)}\right\},$$

$$y = R\left\{k\ln\tan(\frac{\pi}{4} + \frac{\xi}{2}) + 2(1-k)\frac{\sin\xi}{1 + \cos\xi \cos(\eta - \eta_O)}\right\},$$

and

$$m^2 = \frac{k^2}{\cos^2\xi} + \frac{4(1-k)}{\{1 + \cos\xi \cos(\eta - \eta_O)\}^2}\left\{1 + \frac{k\cos(\eta - \eta_O)}{\cos\xi}\right\}.$$

In detail, the oblique Mercator projection is given as $x_1 = (\eta - \eta_o)$, $y_1 = \ln\tan(45° + \frac{\xi}{2})$, and $m_1 = \frac{1}{\cos\xi}$, and, due to $\xi_0 = 0$, the oblique stereographic projection is simplified to:

$$x_2 = 2\frac{\cos\xi \sin(\eta - \eta_O)}{1 + \cos\xi \cos(\eta - \eta_O)},$$

$$y_2 = 2\frac{\sin\xi}{1 + \cos\xi \cos(\eta - \eta_O)},$$

and

$$m_2 = \frac{2}{1 + \cos\xi \cos(\eta - \eta_O)}.$$

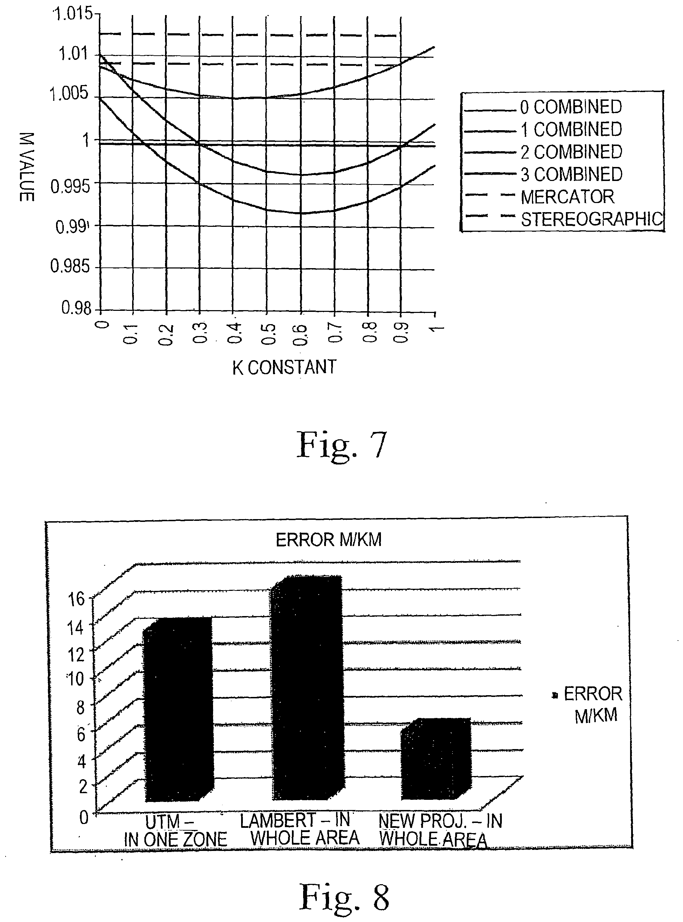

Figure 7 shows a graph illustrating the dependency of the weighting factor $k$ and the scale $m$. The weighting factor $k$ can be a pre-defined value or can be selected from a pre-defined range following any suitable error analysis of the resulting projected map. A preferred method for selecting the weighting factor $k$ analyzes the function $m_{p_i}(k)$ for a set of reference points $p_i = (\xi_i, \eta_i)$. In particular, the minimum of each function $m_{p_i}(k)$ is determined and the corresponding value of $k$ is selected as a candidate for the weighting factor. Such analysis can be performed, for example, by existing differentiation techniques or by determining the function $m_{p_i}(k)$ for a plurality of sample values and either choosing the minimal sample or finding the minimum using interpolation techniques. The weighting factor k is selected to be the maximal minimal value.

Figure 7 shows several functions $m_{p_i}(k)$ for the central point $p_0$ and the reference points $p_1$, $p_2$, and $p_3$ as continuous lines, as well as corresponding functions $m(k)$ for the Mercator projection and the stereographic projection as dashed lines. Since the maximal minimal value of functions $m_{p_i}(k)$ is to be determined, the minimum of the uppermost parabola is selected as the optimal weighting factor $k$. In other words, $k$ reflects the minimum value of $m$ in the highest curve in order to obtain the best accuracy of the combined projection. According to the example of Figure 6, a value of $k = 0.4$ would be chosen as the weighting factor.

Having chosen the optimal weighting factor $k$ each data element of the surface data can be projected on the plain of the resulting map. Since all calculations so far are related to the oblique pole $Q$, the resulting coordinates $(x, y)$ are preferably rotated in a final step, in order to generate a map that is aligned according to the central point $p_O$ and the pole $P$. This can be done by calculating an angle $\tau$, such that

$$\tan\tau = \frac{\cos\varphi_O \cos\varphi_Q \sin(\lambda_Q - \lambda_O)}{\sin\varphi_Q - \sin\varphi_O \sin\xi_O},$$

and by rotating the $X$ and $Y$ axes:

$$X = x\cos\tau + y\sin\tau,$$

and

$$Y = -x\sin\tau + y\cos\tau.$$

The invention can be automated using traditional programming techniques and integrated into existing geographic information systems. The inventive method can also be implemented in dedicated logical hardware connected to such systems.

The inventive method has a large impact on the quality and accuracy of the projected map. Figure 8 shows a bar chart comparing the critical distortion in m/km of state of the art projection techniques with the inventive combined projection method. Even though the present invention is not restricted to a particular projection technique used as the first or second projection method, a combination of the oblique Lambert projection with an oblique stereographic projection, as well as the combination of an oblique Mercator projection with the oblique stereographic projection have been found to suit most relevant areas of the world.

On average, it was found that the critical distortion can be decreased by 72% in relation to state of the art projection techniques. As an example, the critical distortion for an UTM projected map may be at 12.75 m/km in one zone and for the Lambert projection 15.75 m/km in the whole area. In contrast, the inventive combined projection method using a combination of the oblique Lambert projection as the first projection method and the oblique stereographic projection as the second projection method results in a critical distortion of 5.13 m/km in the whole area.

Similarly, an application of the oblique Mercator projection leads to significant improvements in the critical distortion. As an example, the UTM projection results in a critical distortion of 12.75 m/km in one zone and the oblique Mercator projection to a critical distortion of 12.59 m/km in the whole area. In contrast, the inventive combined projection method employing a combination of the oblique Mercator projection as the first projection method and the oblique stereographic projection as the second projection method leads to a critical distortion of 9.3 m/km in the whole area.

The invention is applicable to any surface of an object that is to be projected on a plain and, consequently, to any geographic area on the surface of the earth. Particularly, the invention is not restricted to a certain range of latitude or longitude. It is to be understood that for different geographic regions and areas with varying latitude and longitude the weighting factor k and the reference points must be adjusted to produce reliable and accurately projected maps. For a particular geographic area, an appropriate selection of the reference points $p_O$, $p_i$, as well as the shape and orientation of the desired region have also to be taken into consideration, to define the location of the oblique pole $Q$ and other parameters that may influence further processing.

It is to be understood, that many modifications may be provided to the method or apparatus without leaving the scope of the invention. For example, different projection techniques can be used as the first and the second projection method and the combination can be done according to any other function that is capable of suitably combining the two intermediate results, such as any weighted sum, weighted mean, weighted average, and the like. Also the selection of the reference points can be different from the examples described, which could also be chosen in the periphery or around the centre of the source map. However, certain spatial configurations of the reference points could be avoided to inhibit singularities during computation.

It is to be understood that the invention may be practiced within the scope of the claims differently from the examples describes.

**Claims**

1. A geographic information system comprising an apparatus for map projections, the apparatus comprising:

storage means for storing surface data related to locations on a surface of the earth, which is to be represented on a projected map, wherein the surface data include a set of data elements related to spatiotemporal characteristics of the surface of the earth;
one or more processing units connected to the storage means, wherein the one or more processing units are configured to project the surface data using a first projection method to generate first intermediate data, to project the surface data using a second projection method to generate second intermediate data, and to combine the first and second intermediate data to generate the projected map, wherein the one or more processing units are configured to combine the first and second intermediate data by selecting a weighting factor and applying the weighting factor to a weighted sum of the first and second intermediate data, wherein the first and second intermediate data correspond to positions on a plain and the combination corresponds to a weighted sum of said positions, and wherein the weighting factor is selected in such a way that it reflects the maximal minimal value of functions $m_{p_i}(k)$ for a plurality of reference points $p_0$, $p_1$, $p_2$, and $p_3$ with $m_{p_i}(k)$ denoting the scale of the projection map for a reference point $p_i$ and weighting factor $k$;
input means for selecting said plurality of reference points on the ellipsoid, wherein the one or more processing units are configured to transform the ellipsoid by calculating an oblique pole using said plurality of reference points, calculating oblique spherical coordinates for each of the data element on the ellipsoid and using the oblique pole and the oblique spherical coordinates to derive the surface data; and display means configured to display the projected map.

2. The geographic information system according to claim 1, wherein said selecting reference points comprises selecting at least four reference points.

3. The geographic information system according to claim 1 or 2, wherein each projecting step is performed on a dedicated computing resource of the one or more processing units.

4. The geographic information system according to one of the preceding claims, wherein a portion of the ellipsoid represents one or more UTM zones, preferably four UTM zones, wherein said portion is used to derive the surface data.

5. The geographic information system according to one of the preceding claims, wherein a portion of the ellipsoid represents the surface of the earth in the range of 10° to 40° N latitude and 20° to 60° E longitude, preferably 15° to 35° N latitude and 25° to 60° E longitude, wherein said portion is used to derive the surface data.

6. The geographic information system according to one of the preceding claims, wherein the first projection method is one of an oblique Lambert projection and an oblique Mercator projection, and the second projection method is an oblique stereographic projection.

7. The geographic information system according to one of the preceding claims, wherein the input means and the display means are integrated to form a touchscreen.

**Patentansprüche**

1. Geographisches Informationssystem, das eine Vorrichtung für Kartenprojektionen umfasst, wobei die Vorrichtung Folgendes umfasst:

Speichermittel zum Speichern von Oberflächendaten, die sich auf Orte auf einer Oberfläche der Erde beziehen, die auf einer projizierten Karte repräsentiert werden soll, wobei die Oberflächendaten eine Menge von Datenelementen aufweisen, die sich auf räumlich-zeitliche Eigenschaften der Oberfläche der Erde beziehen;

eine oder mehrere Verarbeitungseinheiten, die mit den Speichermitteln verbunden sind, wobei die eine oder mehreren Verarbeitungseinheiten eingerichtet sind, die Oberflächendaten unter Verwendung eines ersten Projektionsverfahrens zu projizieren, um erste Zwischendaten zu erzeugen, die Oberflächendaten unter Verwendung eines zweiten Projektionsverfahrens zu projizieren, um zweite Zwischendaten zu erzeugen, und die ersten und zweiten Zwischendaten zu kombinieren, um die projizierte Karte zu erzeugen, wobei die eine oder mehreren Verarbeitungseinheiten eingerichtet sind, die ersten und zweiten Zwischendaten durch Auswählen eines Gewichtungsfaktors und Anwenden des Gewichtungsfaktors auf eine gewichtete Summe der ersten und zweiten Zwischendaten zu kombinieren, wobei die ersten und zweiten Zwischendaten Positionen auf einer Ebene entsprechen und die Kombination einer gewichteten Summe der Positionen entspricht und wobei der Gewichtungsfaktor so gewählt ist, dass er den maximalen Minimalwert von Funktionen $m_{p_i}(k)$ für eine Vielzahl von Referenzpunkten $p_0$, $p_1$, $p_2$, und $p_3$ reflektiert, wobei $m_{p_i}(k)$ den Maßstab der Projektionskarte für einen Referenzpunkt $p_i$ und einen Gewichtungsfaktor $k$ angibt; Eingabemittel zum Auswählen der Vielzahl von Referenzpunkten auf dem Ellipsoid, wobei die eine oder mehreren Verarbeitungseinheiten eingerichtet sind, das Ellipsoid durch Berechnen eines Schrägpols unter Verwendung der Vielzahl von Referenzpunkten, durch Berechnen von sphärischen Schrägkoordinaten für jedes der Datenelementen auf dem Ellipsoid und durch Verwenden des Schrägpols und der sphärischen Schrägkoordinaten zu transformieren, um die Oberflächendaten abzuleiten; und

Anzeigemittel, die eingerichtet sind, die projizierte Karte anzuzeigen.

2.  Geographisches Informationssystem nach Anspruch 1, wobei das Auswählen der Referenzpunkte ein Auswählen von mindestens vier Referenzpunkten umfasst.

3.  Geographisches Informationssystem nach Anspruch 1 oder 2, wobei jeder Projektionsschritt auf einer dedizierten Rechenressource der einen oder mehreren Verarbeitungseinheiten ausgeführt wird.

4.  Geographisches Informationssystem nach einem der vorhergehenden Ansprüche, wobei ein Abschnitt des Ellipsoids eine oder mehrere UTM-Zonen, vorzugsweise vier UTM-Zonen, repräsentiert, wobei der Abschnitt verwendet wird, um die Oberflächendaten abzuleiten.

5.  Geographisches Informationssystem nach einem der vorhergehenden Ansprüche, wobei ein Abschnitt des Ellipsoids die Oberfläche der Erde in einem Bereich von 10° bis 40° N Breite und 20° bis 60° E Länge, vorzugsweise 15° bis 35° N Breite und 25° bis 60° E Länge, repräsentiert, wobei der Abschnitt verwendet wird, um die Oberflächendaten abzuleiten.

6.  Geographisches Informationssystem nach einem der vorhergehenden Ansprüche, wobei das erste Projektionsverfahren eines aus einer schiefachsigen Lambert-Projektion und einer schiefachsigen Mercator-Projektion ist und das zweite Projektionsverfahren eine stereographische Schiefprojektion ist.

7.  Geographisches Informationssystem nach einem der vorhergehenden Ansprüche, wobei die Eingabemittel und die Anzeigemittel integriert sind, um ein Touchscreen zu bilden.


**Revendications**

1.  Système d'informations géographiques comprenant un appareil pour des projections de cartes, l'appareil comprenant :

    des moyens de mémorisation pour mémoriser des données de surface relatives à des emplacements sur une surface de la terre, qui doit être représentée sur une carte projetée, dans lequel les données de surface comprennent un ensemble d'éléments de données relatifs à des caractéristiques spatio-temporelles de la surface de la terre ;
    une ou plusieurs unités de traitement connectées aux moyens de mémorisation, dans lequel lesdites une ou plusieurs unités de traitement sont configurées pour projeter les données de surface en utilisant un premier procédé de projection pour générer des premières données intermédiaires, pour projeter les données de surface en utilisant un deuxième procédé de projection pour générer des deuxièmes données intermédiaires, et pour combiner les premières et deuxièmes données intermédiaires pour générer la carte projetée, dans lequel lesdites une ou plusieurs unités de traitement sont configurées pour combiner les premières et deuxièmes données intermédiaires en sélectionnant un coefficient de pondération et en appliquant le coefficient de pondération à une somme pondérée des premières et deuxièmes données intermédiaires, dans lequel les premières et deuxièmes données intermédiaires correspondent à des positions sur un plan et la combinaison correspond à une somme pondérée desdites positions, et dans lequel le coefficient de pondération est sélectionné de manière à ce qu'il reflète la valeur minimale maximale de fonctions $m_{pi}(k)$ pour une pluralité de points de référence $p_0$, $p_1$, $p_2$ et $p_3$, $m_{pi}(k)$ indiquant l'échelle de la carte de projection pour un point de référence $p_i$ et un coefficient de pondération k ;

des moyens d'entrée pour sélectionner ladite pluralité de points de référence sur l'ellipsoïde, dans lequel lesdites une ou plusieurs unités de traitement sont configurées pour transformer l'ellipsoïde en calculant un pôle oblique en utilisant ladite pluralité de points de référence, en calculant des coordonnées sphériques obliques pour chacun des éléments de données sur l'ellipsoïde et en utilisant le pôle oblique et les coordonnées sphériques obliques pour déduire les données de surface ; et

des moyens d'affichage configurés pour afficher la carte projetée.

2. Système d'informations géographiques selon la revendication 1, dans lequel ladite sélection de points de référence comprend la sélection d'au moins quatre points de référence.

3. Système d'informations géographiques selon la revendication 1 ou 2, dans lequel chaque étape de projection est effectuée sur une ressource de calcul dédiée desdites une ou plusieurs unités de traitement.

4. Système d'informations géographiques selon l'une des revendications précédentes, dans lequel une partie de l'ellipsoïde représente une ou plusieurs zones UTM, de préférence quatre zones UTM, dans lequel ladite partie est utilisée pour déduire les données de surface.

5. Système d'informations géographiques selon l'une des revendications précédentes, dans lequel une partie de l'ellipsoïde représente la surface de la terre dans la plage d'une latitude de 10° à 40° N et d'une longitude de 20° à 60° E, de préférence d'une latitude de 15° à 35° N et d'une longitude de 25° à 60° E, dans lequel ladite partie est utilisée pour déduire les données de surface.

6. Système d'informations géographiques selon l'une des revendications précédentes, dans lequel le premier procédé de projection est l'une d'une projection oblique de Lambert et d'une projection oblique de Mercator, et le deuxième procédé de projection est une projection stéréographique oblique.

7. Système d'informations géographiques selon l'une des revendications précédentes, dans lequel les moyens d'entrée et les moyens d'affichage sont intégrés pour former un écran tactile.

Fig. 1

Fig. 2

Fig. 3

Fig. 5

Fig. 6

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020126129 A1

**Non-patent literature cited in the description**

- **DAVID M. GOLDBERG ; J. RICHARD GOTT.** *Large-Scale Distortions in Map Projections,* 2006
- **TIMOTHY G. FEEMAN.** Portraits of the Earth - A Mathematician Looks at Maps. AMS - American Mathematical Society, 2002, vol. 18, 1-85
- *Digital Aearial Sketchmapping Systems,* 2008, http://www.fs.fed.us/foresthealth/technology/pdfs/FS_dasm.pdf
- **GREG STERLING.** Google Earth Updates For PC 8: Mobile, Adds Great iPad Version'', 2010, discloses an adaptation of the Google Earth geographic information system for iOS with native iPad support. A corresponding video is provided at. *Google Earth App Review for iPad,* 2010, https://www.youtube.com/watch?v=n91jjeOBJz8
- **DEREK F REILIY et al.** Map Morphing: Making Sense of Incongruent Maps. *Proceedings of Graphics Interface,* 2004, 231-238